# EUROPEAN PATENT SPECIFICATION

(11) **EP 4 123 262 B1**
(45) Date of publication and mention of the grant of the patent: **20.03.2024**
(21) Application number: 21020382.4
(22) Date of filing: 23.07.2021
(51) Int. Cl.: G01C 21/20, G01C 21/34

(54) **METHOD AND APPARATUS FOR ASSISTING A DRIVER OF AN AUTOMOBILE**
VERFAHREN UND VORRICHTUNG ZUR UNTERSTÜTZUNG EINES AUTOMOBILFAHRERS
PROCEDE ET APPAREIL D'ASSISTANCE AU CONDUCTEUR D'AUTOMOBILE

(43) Date of publication of application: 25.01.2023
(73) Proprietor: Dr.Ing. h.c. F. Porsche Aktiengesellschaft, 70435 Stuttgart (DE)
(72) Inventor: Foligno, Mark, 10245 Berlin (DE)

(56) References cited:
- DE-A1-102016 013 937
- US-A1- 2009 271 109
- US-A1- 2013 041 941
- US-A1- 2018 001 788
- US-A1- 2019 011 273
- US-A1- 2020 020 230

## Description

The present invention pertains to a method of assisting a driver of an automobile. The invention further relates to a corresponding data processing apparatus, a corresponding computer program, and a corresponding computer-readable medium.

### Background art

In the context of automotive accessories and cycling, any device mounted to an automobile or bus for transporting bicycles is commonly referred to as a bicycle carrier or bike rack. Bicycle carriers for passenger cars can be attached to the roof, rear trunk, or rear tow hitch, depending on the vehicle. Bikes may be mounted in the carrier by clamping both wheels and providing some additional vertical support, by clamping the rear wheel and the front dropouts (necessitating the removal of the front wheel, which may be mounted separately on blades), or by clamping the top tube (usually in the case of carriers mounted on the rear hitch).

DE102018202733A1, US20190225154A1, and DE102020004978A1 independently disclose methods of detecting bikes in a vehicle-mounted bicycle rack.

DE 1 02017125490A1 teaches the suggestion of a biking route depending on a user's biking preferences.

US2009/271109 discloses a method wherein a calculated route depends on the vehicle on which the navigation device is mounted.

### Disclosure of the invention

The invention provides a method of assisting a driver of an automobile, a corresponding data processing apparatus, a corresponding computer program, and a corresponding computer-readable medium as per the independent claims.

Embodiments of the invention are set out in the dependent claims and the drawing.

### Brief description of drawings

Figure 1 is a perspective view of an automobile mounting a two-bicycle rack on its rear.
Figure 2 is a block diagram showing the devices used for performing the invention.
Figure 3 is a flow chart showing the sequence steps of a method as per the invention.

### Embodiment of the invention

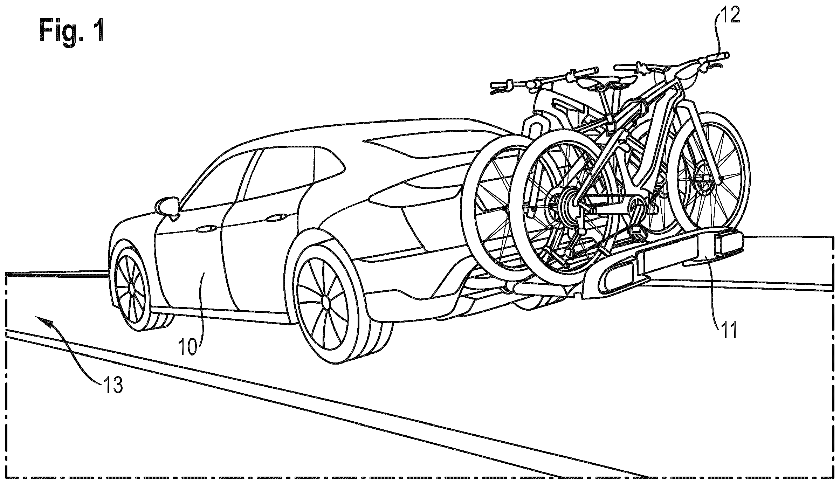

In a typical application of the invention, such as depicted in Figure 1, a bicycle (12) is detected if the bicycle carrier (11) is attached to the automobile (10) and the bicycle (12) is secured to the carrier (11). In this event, a suitable bike trail nearby the automobile (10) is identified based on preferences that the driver has previously expressed by selecting from earlier recommendations.

Once identified, the bike trail, which may take the form of an off-road or scenic on-road trail, is recommended by means of a prioritized in-car infotainment system such as Porsche Communication Management (PCM), optionally making use of an interoperability standard, for example, CarPlay, Android Auto, or MirrorLink.

Upon approval of the recommended bike trail by the driver, a route (13) towards the bike trail's starting point is calculated. Where desired or necessary, parking recommendations are provided as well.

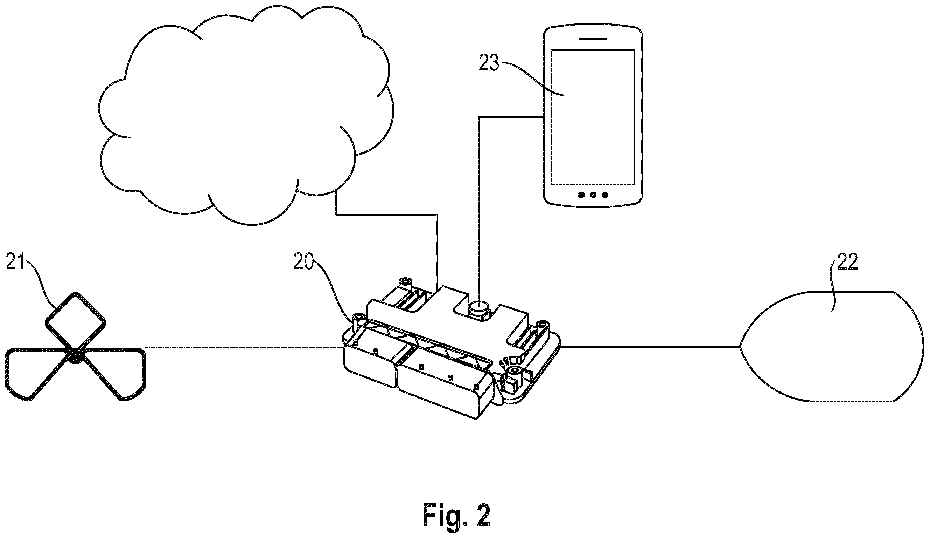

Figure 2 illustrates an electronic control unit (20) for carrying out this method. To detect the bicycle (12) when attached to the carrier (11), the unit (20) uses a preferably battery-free Bluetooth sensor beacon, such as the postage-stamp sized so-called tag (21) offered by Wiliot Ltd, which is powered by harvesting radio energy from active Bluetooth, wi-fi, or cellular terminals. A device of this kind is disclosed in US20200380328A1.

It will be appreciated that an embodiment of the invention is by no means constrained to Bluetooth but may also include other sensors that could provide a similar function, such as a radio-frequency identification (RFID) tag. Said beacon or tag (21) may also incorporate details of the bicycle (12), such as its type (e.g., mountain bike), which can optionally be communicated to the paired unit (20).

To identify a nearby bike trail, the control unit (20) - where available - may employ the global positioning system (GPS) receiver of the automobile (10 - Figure 1), or a portable phone or navigation device (23). For instance, once the bicycle type is obtained from the Bluetooth sensor (21), available bike trails may be located on the Internet through routing or service application programming interfaces (APIs).

The resulting bike trail list is filtered based on characteristics of the bicycle (12) and presented based on the location of the automobile (10) via any available in-car display (22) or interface, such as an embedded car software (SW), smartphone (23), Car Play, Android Auto, MirrorLink, or connected personal navigation device. Pertinent handhelds are offered by manufacturers like TomTom or Garmin.

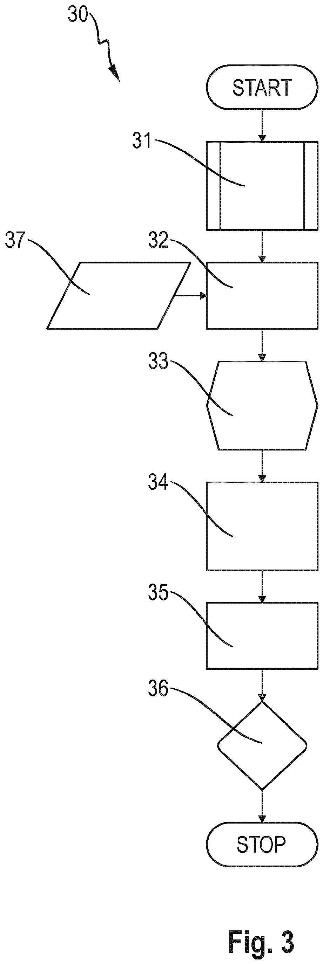

Figure 3 lays out the sequence steps of an exemplary driver assistance method (30) as per the invention in further detail. As a triggering event, a bicycle is detected (31) to be carried by the automobile. On first-time use, the bike trail list is derived solely based on location before being filtered based on bike characteristics. For subsequent use, the method applies rule-based machine learning to refine user route preferences (37) considering known route characteristics (e.g., through forest or along coast). Specifically, rule-based machine learning could be employed to determine any favourite route of the user.

Depending on the preferences (37) thus identified, the bike trail list is assembled (32), prioritized (33) based on location, route characteristics, and favourites, and presented to the driver. Upon approval (34) of the recommended trail, the route towards it is calculated (35) and provided (36) to the driver along with parking recommendations.

## Claims

1. Method (30) of assisting a driver of an automobile (10),
**characterized in that**
- if a bicycle (12) is detected (31) to be carried by the automobile (10), a bike trail is recommended to the driver.

2. Method (30) as per claim 1,
**characterized in that**
- the bicycle (12) is detected (31) if a bicycle carrier (11) is attached to the automobile (10) and the bicycle (12) is secured to the carrier (11).

3. Method (30) as per claim 1 or 2,
**characterized in that**
- the bike trail is identified based on proximity to the automobile (10).

4. Method (30) as per any of claims 1 through 3,
**characterized in that**
- the bike trail is selected depending on preferences (37) of the driver.

5. Method (30) as per claim 4,
**characterized in that**
- the preferences (37) are expressed by selecting from previous recommendations.

6. Method (30) as per any of claims 1 through 5,
**characterized in that**,
- upon approval (34) of the recommended bike trail by the driver, a route (13) towards the bike trail is calculated (35).

7. Method (30) as per claim 6,
**characterized in that**
- upon calculating (35) the route (13), a parking recommendation is provided (36) to the driver.

8. Data processing apparatus (20) having means for carrying out the method (30) as per any of claims 1 through 7.

9. Computer program adapted to perform the method (30) as per any of claims 1 through 7.

10. Computer-readable medium having stored thereon the program as per claim 9.

## Patentansprüche

1. Verfahren (30) zur Unterstützung eines Fahrers eines Kraftfahrzeugs (10),
**dadurch gekennzeichnet, dass**
- wenn ein Fahrrad (12) erkannt wird (31), das von dem Kraftfahrzeug (10) getragen werden soll, dem Fahrer ein Radwanderweg empfohlen wird.

2. Verfahren (30) nach Anspruch 1,
**dadurch gekennzeichnet, dass**
- das Fahrrad (12) erkannt wird (31), wenn ein Fahrradträger (11) an dem Kraftfahrzeug (10) angebracht ist und das Fahrrad (12) an dem Träger (11) befestigt ist.

3. Verfahren (30) nach Anspruch 1 oder 2,
**dadurch gekennzeichnet, dass**
- der Radwanderweg basierend auf der Nähe zu dem Kraftfahrzeug (10) identifiziert wird.

4. Verfahren (30) nach einem der Ansprüche 1 bis 3,
**dadurch gekennzeichnet, dass**
- der Radwanderweg in Abhängigkeit von den Präferenzen (37) des Fahrers ausgewählt wird.

5. Verfahren (30) nach Anspruch 4, **dadurch gekennzeichnet, dass**
- die Präferenzen (37) durch Auswählen aus vorherigen Empfehlungen zum Ausdruck gebracht werden.

6. Verfahren (30) nach einem der Ansprüche 1 bis 5,
**dadurch gekennzeichnet, dass**
- bei Bestätigung (34) des empfohlenen Radwanderwegs durch den Fahrer eine Route (13) zu dem Radwanderweg berechnet wird (35).

7. Verfahren (30) nach Anspruch 6,
**dadurch gekennzeichnet, dass**
- - bei Berechnen (35) der Route (13) dem Fahrer eine Parkempfehlung gegeben wird (36).

8. Datenverarbeitungsvorrichtung (20), die Mittel zum Durchführen des Verfahrens (30) nach einem der Ansprüche 1 bis 7 aufweist.

9. Computerprogramm, ausgestaltet zum Durchführen des Verfahrens (30) nach einem der Ansprüche 1 bis 7.

10. Computerlesbares Medium, auf dem das Programm nach Anspruch 9 gespeichert ist.

## Revendications

1. Procédé (30) d'assistance au conducteur d'une automobile (10), **caractérisé en ce que**
- si un vélo (12) est détecté (31) comme devant être transporté par l'automobile (10), une piste cyclable est recommandée au conducteur.

2. Procédé (30) selon la revendication 1, **caractérisé en ce que**
- le vélo (12) est détecté (31) si un porte-vélo (11) est fixé à l'automobile (10) et le vélo (12) est arrimé au porte-vélo (11).

3. Procédé (30) selon la revendication 1 ou 2, **caractérisé en ce que**
- la piste cyclable est identifiée sur la base de la proximité de l'automobile (10).

4. Procédé (30) selon l'une quelconque des revendications 1 à 3, **caractérisé en ce que**
- la piste cyclable est choisie en fonction de préférences (37) du conducteur.

5. Procédé (30) selon la revendication 4, **caractérisé en ce que**
- les préférences (37) sont exprimées en choisissant parmi les recommandations précédentes.

6. Procédé (30) selon l'une quelconque des revendications 1 à 5, **caractérisé en ce que**,
- lors de l'approbation (34) de la piste cyclable recommandée par le conducteur, un itinéraire (13) vers la piste cyclable est calculé (35).

7. Procédé (30) selon la revendication 6, **caractérisé en ce que**
- - lors du calcul (35) de l'itinéraire (13), une recommandation de stationnement est fournie (36) au conducteur.

8. Appareil de traitement de données (20) ayant des moyens pour exécuter le procédé (30) selon l'une quelconque des revendications 1 à 7.

9. Programme informatique adapté pour réaliser le procédé (30) selon l'une quelconque des revendications 1 à 7.

10. Support lisible par ordinateur sur lequel est stocké, le programme selon la revendication 9.
